# EUROPEAN PATENT APPLICATION

(11) **EP 2 983 080 A1**
(43) Date of publication of application: **10.02.2016**
(21) Application number: 14180265.2
(22) Date of filing: 07.08.2014
(51) Int. Cl.: G06F 3/0488, H04M 1/725, G06F 9/48

(54) **Audio source control**

(71) Applicant: Nokia Technologies OY, 02610 Espoo (FI)
(72) Inventor: Laaksonen, Lasse Juhani, 33720 Tampere (FI); Lehtiniemi, Arto Juhani, 33720 Tampere (FI); Tammi, Mikko Tapio, 33720 Tampere (FI); Vilermo, Miikka Tapani, 33720 Tampere (FI)
(74) Representative: Swindell & Pearson Limited

(57) **Abstract**

Apparatus, a method and a computer program are provided. The method comprises: running, on a computing device having a multitasking environment with a foreground and a background, a first application in the foreground; running a second application on the computing device, in the background, concurrently with the first application; and responding to user input by enabling audio from the second application to be output by one or more loudspeakers while the second application remains in the background of the multitasking environment.

## Description

### TECHNOLOGICAL FIELD

Embodiments of the present invention relate to audio source control. Some embodiments relate to controlling the audio source in a computing device having a multitasking environment.

### BACKGROUND

Multitasking is a process in which a computing device performs multiple tasks/processes concurrently. The same processing resources (for example, a central processing unit and a memory) are used to perform the tasks/processes.

For instance, a computing device may have a multitasking environment in which may have a foreground and a background. The multitasking environment may be managed by an operating system upon which applications are run. One or more applications may run in the foreground of the multitasking environment while several other applications run in the background.

The application running in the foreground of the multitasking environment may be termed 'the foreground application' and an application running in the background of the multitasking environment may be termed 'a background application'.

The multitasking environment may operate such that some/a majority of the processing resources that are available in the computing device are allocated to the foreground application(s) in preference to any background applications. That is, the foreground application(s) is/are prioritized over the background applications by the multitasking environment.

The foreground application(s) may be displayed at the forefront of a graphical user interface of the computing device. For example, the whole or the majority of a display of the computing device may display the foreground application(s). Background applications may or may not be displayed on the display of the computing device.

### BRIEF SUMMARY

According to various, but not necessarily all, embodiments of the invention there is provided a method, comprising: running, on a computing device having a multitasking environment with a foreground and a background, a first application in the foreground; running a second application on the computing device, in the background, concurrently with the first application; and responding to user input, while the first application is running in the foreground and the second application is running in the background, by enabling audio from the second application to be output by one or more loudspeakers while the second application remains in the background of the multitasking environment.

According to various, but not necessarily all, embodiments of the invention there is provided computer program code that, when performed by at least one processor, causes at least the following to be performed: running, on a computing device having a multitasking environment with a foreground and a background, a first application in the foreground; running a second application on the computing device, in the background, concurrently with the first application; and responding to user input, while the first application is running in the foreground and the second application is running in the background, by enabling audio from the second application to be output by one or more loudspeakers while the second application remains in the background of the multitasking environment.

The computer program code may be stored on a non-transitory computer readable medium.

According to various, but not necessarily all, embodiments of the invention there is provided an apparatus, comprising: means for running, on a computing device having a multitasking environment with a foreground and a background, a first application in the foreground; means for running a second application on the computing device, in the background, concurrently with the first application; and means for responding to user input, while the first application is running in the foreground and the second application is running in the background, by enabling audio from the second application to be output by one or more loudspeakers while the second application remains in the background of the multitasking environment.

According to various, but not necessarily all, embodiments of the invention, there is provided an apparatus, comprising: at least one processor; and memory comprising computer program code configured to, with the at least one processor, cause at least the following to be performed: running, on a computing device having a multitasking environment with a foreground and a background, a first application in the foreground; running a second application on the computing device, in the background, concurrently with the first application; and responding to user input, while the first application is running in the foreground and the second application is running in the background, by enabling audio from the second application to be output by one or more loudspeakers while the second application remains in the background of the multitasking environment.

### BRIEF DESCRIPTION

For a better understanding of various examples that are useful for understanding the brief description, reference will now be made by way of example only to the accompanying drawings in which:
fig. 1 illustrates an apparatus in the form of a chipset;
fig. 2 illustrates a further apparatus in the form of a portable electronic device;
fig. 3A illustrates a first perspective view of the portable electronic device;
fig. 3B illustrates a second perspective view of the portable electronic device;
fig. 4 illustrates a flow chart of a method;
fig. 5 illustrates a user providing a translation input to enable audio from a background application to be output by one or more loudspeakers of the computing device;
fig. 6 illustrates a display of the computing device displaying options which enable a user to select a background application to provide the audio source to the loudspeaker(s) of the computing device;
fig. 7A illustrates a rear face of the computing device divided into four virtual parts; and
fig. 7B illustrates different areas of the display of the computing device being allocated to different background applications.

### DETAILED DESCRIPTION

Embodiments of the invention relate to controlling audio sources in a computing device having a multitasking environment. For example, embodiments of the invention enable a user to provide user input to enable audio of a background application to be output by the loudspeaker(s). The audio from the background application may be output in preference to that of a foreground application.

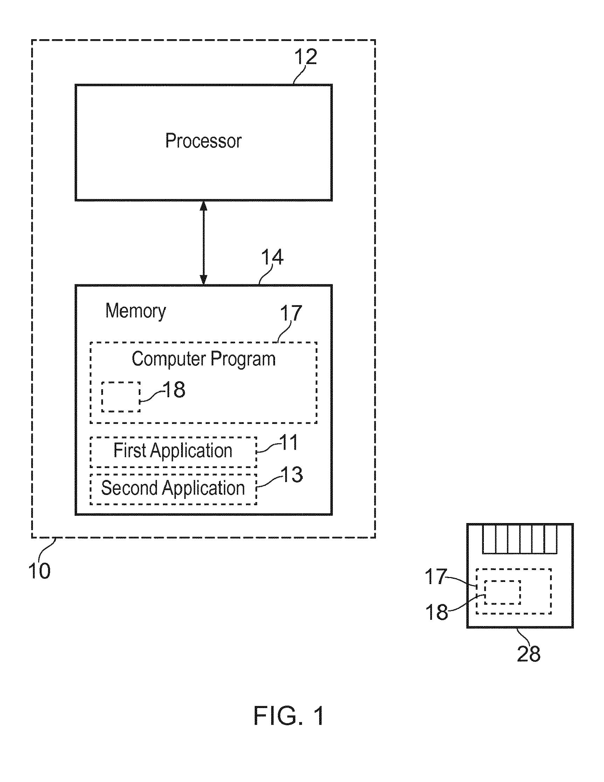

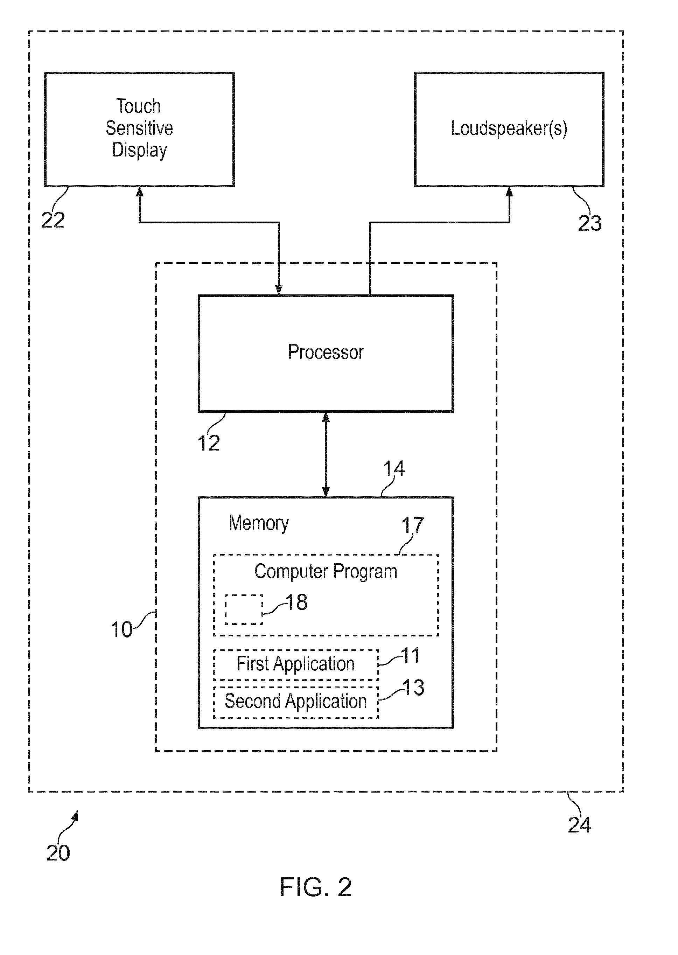

Figure 1 illustrates an apparatus 10 that may be a chip or a chipset. The apparatus 10 may form part of an electronic device such as that illustrated in figure 2.

The apparatus 10 comprises at least one processor 12 and at least one memory 14. A single processor 12 and a single memory 14 are shown in figure 1 for illustrative purposes.

The processor 12 is configured to read from and write to the memory 14. The processor 12 may comprise an output interface via which data and/or commands are output by the processor 12 and an input interface via which data and/or commands are input to the processor 12.

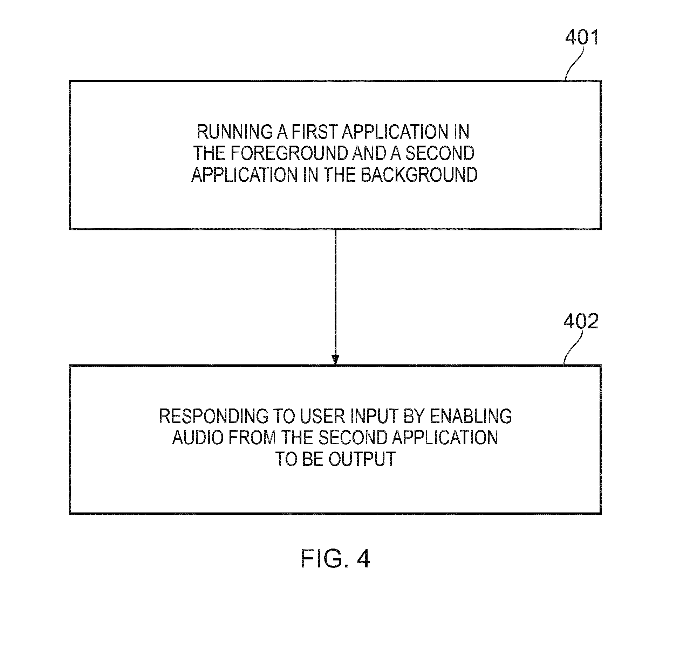

The memory 14 is illustrated as storing a computer program 17 which comprises computer program instructions/code 18 that control the operation of the apparatus 10 when loaded into the processor 12. The processor 12, by reading the memory, is able to load and execute the computer program code 18. The computer program code 18 provides the logic and routines that enables the apparatus 10 to perform the method illustrated in figure 4 and described below. In this regard, the processor 12 and the computer program code 18 provide means for performing the method illustrated in figure 4 and described below.

The computer program 17 may, for example, be an operating system that is configured to manage a multitasking environment as described above. The operating system may be configured to enable applications, such as the first and second applications 11, 13 illustrated in the memory 14 in fig. 1, to run on a computing device.

As explained above, the multitasking environment may have a foreground and a background. One or more applications may run in the foreground of the multitasking environment while several other applications run in the background.

Applications may run concurrently in the multitasking environment. That is, the multitasking environment enables execution of a task/process of one application (such as the second application 13) to commence before execution of a task/process related to another application (such as the first application 11) has been completed.

An application is not considered to be "running" in the background of the multitasking environment if execution of the application has been placed into a suspended state. If an application has been placed into a suspended state, it may be necessary for a user to provide some user input to cause the processor 12 to re-commence execution of that application.

In some implementations, the apparatus 10 comprises a single processor 12 with a single processing core. In these implementations, the processor 12 is not configured to execute multiple applications in parallel and may be configured to perform preemptive multitasking and/or non-preemptive/cooperative multitasking.

In performing multitasking, a processor 12 with a single processing core may, for example, commence execution of the first application 11 (for example, in the foreground of the multitasking environment), switch from the first application 11 to the second application 13 in order to commence execution of the second application 13 (for example, in the background of the multitasking environment), and then return to the first application 11 to re-commence execution of the first application 11 (for example, in the foreground of the multitasking environment, without user input being required to cause re-commencement of the execution of the first application 11). In effect, in performing multitasking, a processor 12 with a single processing core interleaves/time slices the first and second applications 11, 13 when executing them. In other implementations, the apparatus 10 comprises one or more processors 12 that include multiple processing cores. In these implementations, multiple applications (such as the first and second applications 11, 13) may be executed in parallel in the multitasking environment by the multiple processing cores. Execution of the first and second applications 11, 13 may, for example, overlap in time. In these implementations, preemptive multitasking and/or non-premptive/cooperative multitasking may be performed by one or more of the multiple processing cores.

Although the memory 14 is illustrated as a single component in figure 1, it may be implemented as one or more separate components, some or all of which may be integrated/removable and/or may provide permanent/semi-permanent/dynamic/cached storage.

The computer program code 18 may arrive at the apparatus 10 via any suitable delivery mechanism 28. The delivery mechanism 28 may be, for example, a non-transitory computer-readable storage medium such as an optical disc or a memory card. The delivery mechanism 28 may be a signal configured to reliably transfer the computer program code 18. The apparatus 10 may cause the propagation or transmission of the computer program code 18 as a computer data signal.

Figure 2 illustrates a further apparatus 20 in the form of a computing device. The further apparatus 20 may, for example, be a hand portable computing device such as a mobile telephone, a tablet computer, a games console or a personal music player.

The example of the apparatus 20 illustrated in figure 2 includes an electronic touch sensitive display 22, one or more loudspeaker 23, and the apparatus 10 illustrated in figure 1 co-located in a housing/body 24. In other examples, the electronic device 20 might, for example, comprise other elements such as one or more radio frequency transceivers.

While the apparatus 20 comprises one or more loudspeakers 23 in the example illustrated in figure 2, in other examples, the apparatus 20 might not comprise any of its own loudspeakers. Irrespective of whether the apparatus 20 comprises any loudspeakers, the processor 12 of the apparatus 20 may be configured to cause an (inaudible) audio data signal (in digital or analog format) to be output to one or more loudspeakers that are external to the (housing 24 of the) apparatus 20 which, in turn, output an (audible) audio signal. The external loudspeaker(s) may be connected to the apparatus 20 via a wired or a wireless connection.

The elements 12, 14, 22 and 23 are operationally coupled and any number or combination of intervening elements can exist between them (including no intervening elements).

The processor 12 is configured to receive and process inputs from the touch sensitive display 22. The touch sensitive display 22 may be any type of display. It may, for example, be a liquid crystal display (LCD), an organic light emitting diode (OLED) display or a quantum dot display. The touch-sensitive display 22 may be any type of touch-sensitive display. It might function, for example, using capacitive, resistive, infrared, dispersive signal and/or acoustic pulse technology.

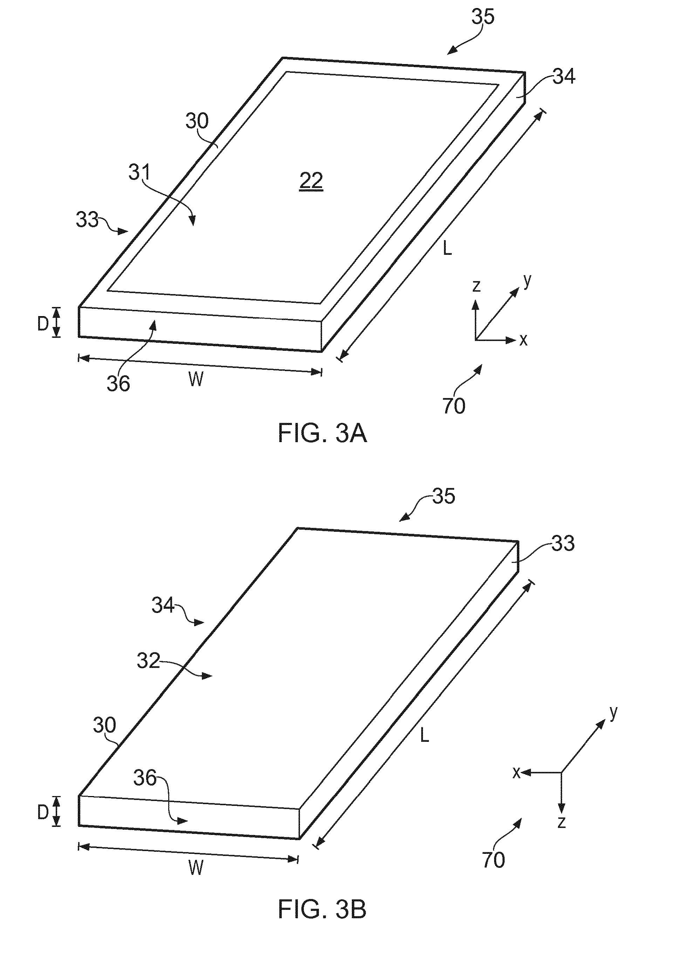

Fig. 3A illustrates a perspective view of an example of the apparatus 20 illustrated schematically in fig. 2. Fig. 3B illustrates a second perspective view of the apparatus 20 from another angle. Cartesian co-ordinate axes 70 are present in figures 3A and 3B to show the orientation of the apparatus 20 in figure 3B compared with figure 3A.

The body 30 of the apparatus 20 has a length L, a width W and a depth D. The length L is the same or greater than the width W. The width W is the same or greater than the depth D. The length L may be substantially perpendicular to the width W and/or the depth D. The width W may be substantially perpendicular to the depth D.

The body 30 of the apparatus 20 comprises a front face/surface 31, a rear face/surface 32, a first side face/surface 33, a second side face/surface 34, an upper face/surface 35 and a lower face/surface 36. The touch sensitive display 22 is visible through the front face 31 when it is powered.

One, some or all of the faces 31-35 may be substantially flat. Alternatively or additionally, one, some or all of the faces 31-35 may be curved.

In the illustrated example, the front face 31 is separated from the rear face 32 by the thickness/depth D of the body 30. The first side face 33 is separated from the second side face 34 by the width W of the body 30. The upper face 35 is separated from the lower face 36 by the length L of the body 30.

One, some or all of the faces 31-36 of the body may be touch sensitive. That is, the computing device 20 may comprise touch sensing circuitry outside of the touch sensitive display 22 which enables some or all of each of the faces 31-36 to sense touch. Any type of touch sensing circuitry may be provided, such as capacitive, resistive, infrared, dispersive signal and/or acoustic pulse technology.

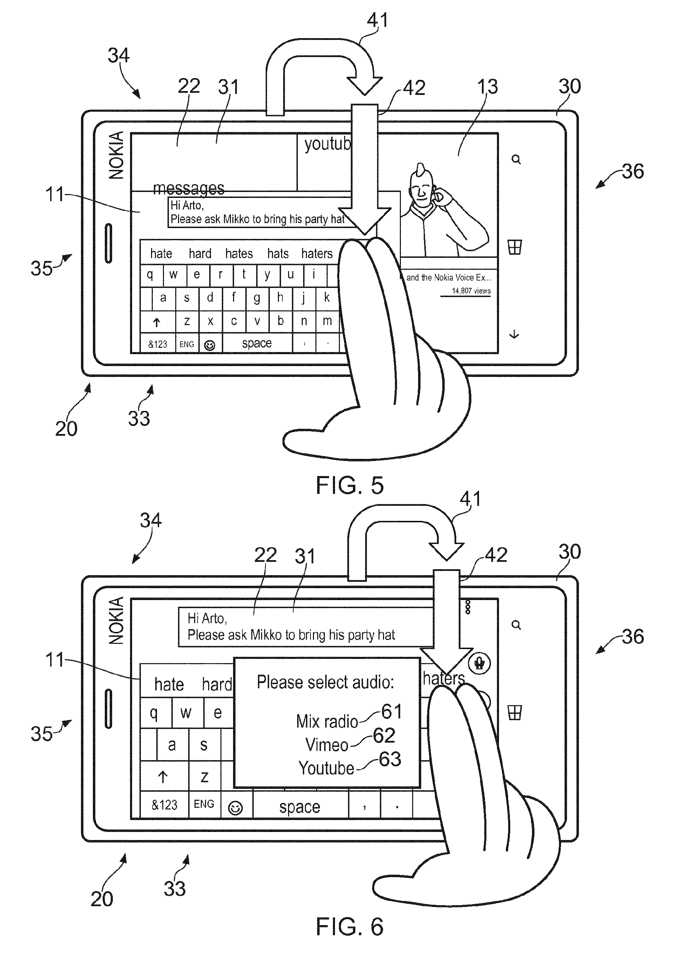

A method according to embodiments of the invention will now be described in relation to figures 4 and 5. Figure 4 illustrates a flow chart of the method. Figure 5 is a front elevation of an example of the computing device 20.

In the description below reference is made to the computing device 20 comprising a plurality of loudspeakers 23 that are part of the computing device 20. However, as explained above, the computing device 20 may only have a single loudspeaker 23 and/or the loudspeaker(s) 23 may be external to the computing device 20.

In block 401 of figure 4, the computing device 20 is running first and second applications 11, 13 concurrently in the multitasking environment. The first application 11 is running in the foreground and the second application 13 is running in the background.

In order to cause the first and second applications 11, 13 to run concurrently on the computing device 20, the user may provide user input to initiate execution of the second application 13 on the computing device 20 and then subsequently provide user input to initiate execution of the first application 11. The processor 12 may cause the second application 13 to run in the background of the multitasking environment when execution of the first application 11 is initiated.

In the example illustrated in figure 5, the first application 11 is a messages application and the second application 13 is a video playback application. It can be seen in figure 5 that the applications 11, 13 have been cascaded on the display 22 such that both the first application 11 and the second application 13 are visible on the display 22. However, in other examples, any applications running in the background of the multitasking environment might not be visible on the display 22. In such examples, the application in the foreground of the display 22 may encompass substantially the whole of the area of the display 22.

In block 402 of figure 4, the user provides user input while the first application 11 is running in the foreground of the multitasking environment and the second application 13 is running in the background of the multitasking environment. Prior to the user input being provided, audio from the first application 11 may be being output by the loudspeakers 23. The processor 12 responds to the user input by causing/enabling audio from the second application 13 to the output by the loudspeakers 23 of the computing device 20 while the second application 13 remains in the background of the multitasking environment.

In some implementations, the first application 11 might not provide an audio source. In such implementations, when the processor 12 enables audio from the second application 13 to be output by the one or more loudspeakers 23 of the computing device 20, it may cause audio output to commence from the loudspeakers 23.

In other implementations, the first application 11 provides an audio source. In these implementations, when the processor 12 enables audio from the second application 13 to be output by the loudspeakers 23, it may either i) prevent the first application 11 from outputting audio via the loudspeakers 23, or ii) enable the first and second applications 11, 13 to output audio from the loudspeakers 23 concurrently.

In i), the processor 12 may cause the loudspeakers 23 to cease outputting audio from the first application 11 if audio from the first application 11 is being output when the user input is provided by the user.

In ii), in the context of the example illustrated in figure 5, when the processor 12 enables audio from the video playback application 13 to be output by the loudspeakers 23, the audio of a video being played in the video playback application 13 may be output by the loudspeakers 23 and audio from the messages application 11 may also be output by the loudspeakers 23 (for example, a "clicking sound" may be output each time the user provides touch input at a letter on a displayed keyboard in the messages application 11).

In implementations where the processor 12 is configured to cause the loudspeakers 23 to output audio from multiple applications 11, 13 concurrently, it may prioritize audio from one application over the other. For example, it may prioritize audio from the first application 11 in the foreground over audio provided by the second application 13 in the background. That is, if audio is provided at the same instance in time by both the first and second applications 11, 13 in the context of the current example, the processor 12 may prioritize the audio from the first application 11, such that, at a particular instance in time, the audio from the first application 11 can be heard but not the audio from the second application 13 cannot.

In the example illustrated in figure 5, the input provided by the user is a translation input. A translation input is a continuous displacement input which has a start location and an end location. In providing a translation input, the user places a user input object (such as a digit or a stylus) at a start location and provides a continuous displacement input by moving the user input object to an end location. For example, the translation input may be provided by placing a user input object on a surface at a start location and then providing a continuous displacement input by moving the user input object across the surface to an end location, while the user input object remains in contact with the surface.

In the example illustrated in figure 5, at least a portion of each of the following faces of the computing device 20 is touch sensitive: the rear face 32, second side face 34 and the front face 31. In this example, the user input that the user provides to enable audio from the second application 13 to be output by the loudspeakers 23 is a translation input which has a start location on the rear face 32 and an end location on the front face 31. When a user provides the translation input, he moves a user input object, such as a digit, from the start location on the rear face 32, across the second side face 34 and to the front face 31, where the translation input ends when it has reached its end location. The user input object remains in contact with the body 30 of the computing device 20 as it moves from the start location to the end location. In figure 5, the arrows labeled with the reference numerals 41 and 42 illustrate the translation input being provided. The translation input may be provided using two digits simultaneously, as illustrated in figure 5.

A technical effect of embodiments of the invention is that it enables a user to cause audio from a background application to be output by a loudspeaker 23 without bringing that background application into the foreground of the multitasking environment. The translation input illustrated in figure 5 is particularly intuitive in that the user feels as if he is "pulling" the audio from the background application to the forefront of the multitasking environment.

Without limiting the scope of the claims an advantage is, in the context of the example illustrated in figure 5, that the user may listen to the audio of a video using the video playback application while using the messages application. When the nature of the audio indicates to him that an interesting point in the video has been reached, he may provide user input which causes the video playback application to move to the foreground and the video to be displayed (in full).

The video playback application might not decode video when it is in the background of the multitasking environment. It may begin to decode video when it is moved to the foreground of the multitasking environment.

Figure 6 illustrates an embodiment of the invention in which there are multiple applications running in the background of the multitasking environment. In this example, the following examples are running in the background: a music playback application, a video sharing application and a video playback application.

The user input that is provided in the figure 6 example comprises two user input actions rather than the single user input action described above in the figure 5 example. In the figure 6 example, the user provides the same translation input as that described above in relation to figure 5, which causes the processor 12 to respond by causing the display 22 to display a plurality of options 61-63. Each option 61-63 relates to a different application that is running in the background of the multitasking environment. A first option 61 is associated with the music playback application, a second option 62 is associated with the video sharing application and a third option 63 is associated with the video playback application.

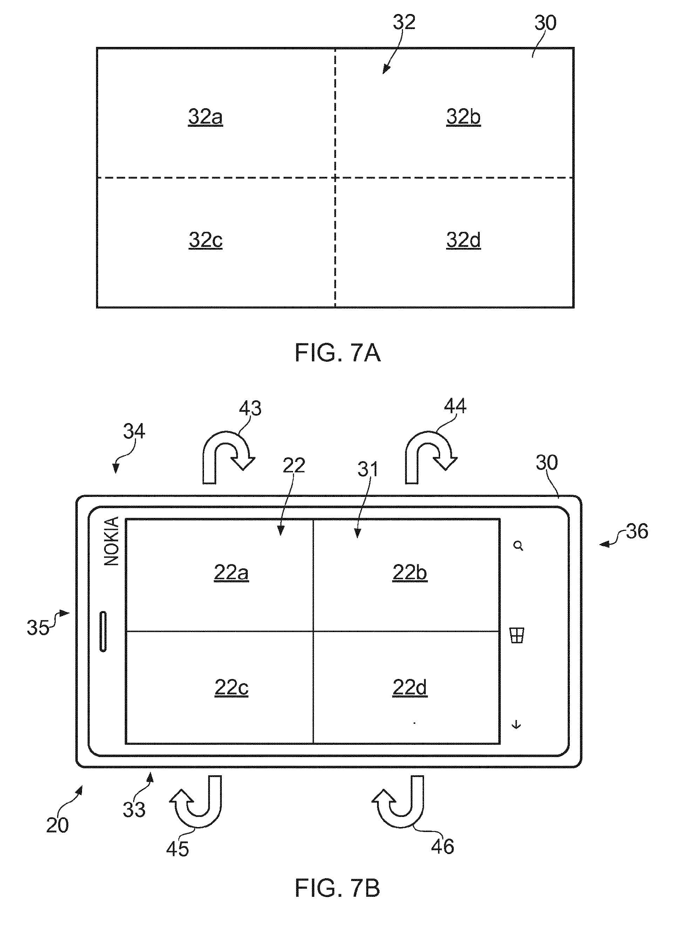

The user may provide input at one of the displayed options 61-63 to cause the processor 12 to enable the loudspeakers 23 to output audio from that application. Another embodiment of the invention is illustrated in figures 7A, and 7B. In this embodiment, different regions of the rear face 32 of the body 30 are associated with different applications running in the background of the multitasking environment. A first region 32a is associated with a first application running in the background. A second region 32b is associated with a second application running in the background. A third region 32c is associated with a third application running in the background. A fourth region 32d is associated with a fourth application running in the background.

Figure 7B illustrates a situation where different portions of the display 22 are allocated to each of the four applications running in the background of the multitasking environment. A first region 22a of the display is allocated to the first application. A second region 22b of the display 22 is allocated to the second application. A third region of the display 22c is associated with the third application. And a fourth region 22d is associated with a fourth application.

For example, each of the regions 22a to 22d of the display 22 may comprise or consist of a graphical item representing the relevant application. For instance, the screen being displayed in figure 7B may be a task switching screen of the operating system.

In this embodiment, different translation inputs are associated with different applications running in the background. The audio that is output by the loudspeaker depends upon which translation input is provided by the user.

For example, in the context of figures 7A and 7B, if the user provides a first translation input in which the start location of the translation input is in the first region 32a of the rear face 32 of the body 30, the processor 12 responds by enabling audio from the first application, associated with the first region 32a, to be output by the loudspeakers 23. Such a translation input is illustrated by the arrow labeled with the reference numeral 43 in figure 7B. In some examples it may be necessary for the user to end the translation input in the region 22a of the display that is associated with the first application 11, but in other examples it is not necessary.

The processor 12 responds to a translation input which has a start location in the second region 32b of the rear face 32 by enabling audio from the second application to be output by the loudspeakers 23. Such a translation input is illustrated by the arrow labeled with the reference numeral 44 in figure 7B. It may or may not be necessary for the end location of the translation input to be in the second region 22b of the display 22.

The processor 12 responds to a translation input which has a start location in the third region 32c of the rear face 32 by enabling audio from the third application to be output by the loudspeakers 23. Such a translation input is illustrated by the arrow labeled with the reference numeral 45 in figure 7B. It may or may not be necessary for the end location of the translation input to be in the region 22c of the display 22 that represents the third application.

The processor 12 responds to a translation input which has a start location in the fourth region 32d of the rear face 32 by enabling audio from the fourth application to be output by the loudspeakers 23. Such a translation input is illustrated by the arrow labeled with the reference numeral 46 in figure 7B. It may or may not be necessary for the translation input to have an end location in the region 22d of the display 22 which represents the fourth application.

In some embodiments of the invention, additionally or alternatively, the processor 12 may be configured to associate translation inputs of different directions with different applications running in the background. For example, a translation input in which a user input object is displaced in a first direction may be associated with a first application and a translation input which has a displacement input in a second direction, different from the first direction, may be associated with a second application. The processor 12 may be configured to determine a direction of a translation input and then enable audio from a particular application to be output by the loudspeakers 23 depending upon the determined direction. For example, if the processor 12 determines that a translation input is provided in the first direction, it may enable audio from the first application to be output by the loudspeakers 23. If the processor 12 determines that a translation input is provided in the second direction, it may enable audio from the second application to be output by the loudspeakers 23. In some implementations, the user may be able to map different translation inputs to different background applications. For example, translation inputs of different directions may be mapped by the user to different background applications. Alternatively or additionally, translation inputs with different end locations may be mapped by the user to different background applications.

The user may be able to map a particular translation input to a particular background application by performing the opposite translation input to that which enables audio from the application to be output by the loudspeakers. By way of example, if the user wished to map the second application displayed in the second region 22b of the display 22 to the translation input illustrated by the arrow labeled with the reference numeral 44 in figure 7B, he would perform a translation input that has a start location in the second region 22b of the display 22 and an end location in the second region 32b of the rear face 32. In some embodiments, subsequent performance of the "opposite translation input" may cause the processor 12 to control the loudspeakers to cease outputting audio from (that is, mute) the relevant application. Effectively, by performing the opposite translation input, the user intuitively feels as if he is placing the audio "back into the background" of the multitasking environment.

In embodiments where the computing device 20 comprises a plurality of loudspeakers 23, audio from different applications may be mapped to different loudspeakers. For example, audio from the first application 11 in the foreground may be mapped to a first loudspeaker and audio from a second application 13 running in the background may be mapped to a second loudspeaker. It may be that, initially, audio from the first application 11 running in the foreground is being output by first and second loudspeakers of the computing device 20, and when the user provides the user input which causes audio from the second application 13 to be output, the processor 12 maps the audio from the second application 13 to the second loudspeaker without mapping the audio from the second application 13 to the first loudspeaker. Thus, audio from the first application 11 running in the foreground may continue to be output by the first loudspeaker.

In some implementations, (in the context of the example described above in figure 7B) rather than each region 22a-22d of the display 22 being associated with a particular application, each region 22a-22d of the display 22 relates to a different loudspeaker. In such implementations, the end location of the translation input determines which loudspeaker(s) output audio from the relevant application.

When the user enables audio from a second application 13 running in the background to be output by the loudspeakers 23, it may cause at least one audio control (such as a volume control) to be displayed in the foreground of the multitasking environment which enables audio from the second application 13 to be controlled, while the second application 13 remains in the background of the multitasking environment. In some examples, the at least one audio control may only be displayed in response to specific user input, such as a particular translation input provided on the display 22. An example of such a translation input might be one in which the start location is on or above a top edge of the display 22, the displacement of the user input object is downwards and the end location is within the area of the display 22.

In further embodiments, the audio control that is displayed may be a relative volume control between a foreground application and a (selected) background application. For example, the relative volume control may enable a user to adjust the volume level of the audio from the foreground application and the volume level of the audio from the background application. This could, for example, be a single "balance" control which causes the volume of the audio from the foreground application to decrease if the volume of the audio from the background application is increased, and vice-versa.

References to 'computer-readable storage medium', or a 'computer', 'processor' etc. should be understood to encompass not only computers having different architectures such as single/multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in figure 4 may represent actions in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For example, the user input that is provided to enable audio from a background application to be output by the loudspeakers 23 need not be a translation input of the form described above in relation to figures 5 to 7B and, in some embodiments, need not include a translation input. Other examples of translation inputs which could be used include translation inputs which have start and end locations on the rear face 32 of the computing device 20. For example, in the context of the example illustrated in figures 7A and 7B, a translation input which causes audio from an application running in the background to be output via the loudspeakers 23 could have a start location and end location in the first region 32a of the rear face 32 of the computing device 20.

In some embodiments, the translation input may be a hover input. In such embodiments, the computing device 20 comprises user input circuitry configured to detect hovering user input objects. The translation input may be provided by bringing a user input object within a hover distance of the (housing 24 of the) computing device 20 then providing a continuous displacement input by moving the user input object to an end location, while the user input object remains within the hover distance.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method, comprising:
running, on a computing device having a multitasking environment with a foreground and a background, a first application in the foreground;
running a second application on the computing device, in the background,
concurrently with the first application; and
responding to user input, while the first application is running in the foreground and the second application is running in the background, by enabling audio from the second application to be output by one or more loudspeakers while the second application remains in the background of the multitasking environment.

2. The method of claim 1, wherein the user input comprises a translation input.

3. The method of claim 2, further comprising: associating different translation inputs with different applications running in the background of the multitasking environment; and deciding to respond to the translation input by enabling audio from the second application to be output by one or more loudspeakers after determining that the translation input is associated with the second application.

4. The method of claim 3, wherein the different translation inputs are translation inputs of different directions, and determining that the translation input is associated with the second application comprises determining that a direction of the translation input is associated with the second application.

5. The method of claim 3 or 4, wherein the different translation inputs are translation inputs with different start locations, and the translation input is associated with the second application comprises determining that a start location of the translation input is associated with the second location.

6. The method of claim 5, wherein the start location of the translation input is on a first face of an outer body of the computing device and an end location of the translation input is on a second face of the computing device.

7. The method of claim 6, wherein the first face and the second face are separated by the thickness of the computing device.

8. The method of claim 6 or 7, wherein an electronic display is visible through the second face of the outer body of the computing device.

9. The method of claim 1 or 2, wherein the user input further comprises: selecting an option representing the second application from multiple options representing multiple applications running in the background of the multitasking environment.

10. The method of any of the preceding claims, wherein prior to reception of the user input, audio from the first application is output by the one or more loudspeakers.

11. The method of any of the preceding claims, wherein responding to the user input comprises causing the one or more loudspeakers to cease outputting audio from the first application.

12. The method of any of the preceding claims, wherein the computing device has at least first and second loudspeakers, and responding to user input comprises:
mapping the audio from the second application to the second loudspeaker without mapping the audio from the second application to the first loudspeaker.

13. The method of any of the preceding claims, further comprising: causing at least one audio control to be displayed in the foreground of the multitasking environment which enables audio from the second application to be controlled while the second application is in the background of the multitasking environment.

14. Computer program code that, when performed by at least one processor, causes the method of any of claims 1 to 13 to be performed.

15. An apparatus comprising means for performing the method of at least one of claims 1 to 14.
